# EUROPEAN PATENT SPECIFICATION

(11) **EP 2 603 711 B1**
(45) Date of publication and mention of the grant of the patent: **18.06.2014**
(21) Application number: 11746302.6
(22) Date of filing: 12.08.2011
(51) Int. Cl.: F16D 27/00, F16D 27/112

(54) **ELECTROMAGNETIC BRAKE OR CLUTCH AND METHOD OF OPERATION**
ELEKTROMAGNETISCHE BREMSE ODER KUPPLUNG UND BEDIENUNGSVERFAHREN
FREIN OU EMBRAYAGE ÉLECTROMAGNÉTIQUE ET PROCÉDÉ DE FONCTIONNEMENT

(30) Priority: 12.08.2010 GB 201013576
(43) Date of publication of application: 19.06.2013
(73) Proprietor: Microtecnica S.r.l., 10126 Turin (IT)
(72) Inventor: COLLINS, Andrew John, Somerset BS23 2SR (GB)
(74) Representative: Leckey, David Herbert
(86) International application number: PCT/GB2011/051526
(87) International publication number: WO 2012/020265

(56) References cited:
- WO-A1-2010/058233
- DE-A1-102004 039 264
- DE-A1-102007 058 552
- US-A1- 2006 278 491

## Description

### Technical Field

This invention relates generally to electromagnetic brakes and clutches and to their method of operation.

### Background of the Invention

In a known form of electromagnetic brake, the braking is achieved by frictional contact between confronting faces of a rotor disc and a stator disc. The rotor disc and stator disc are biased towards each other by a compression spring and the braking force is provided by the frictional contact of the two discs pressed together by the spring. To disengage the brake a stator coil is energised which moves the stator disc away from the rotor disc towards the stator coil against the bias of the compression spring. Once the stator disc is out of contact with the rotor disc the braking force is removed.

In the form of brake just described, the force exerted on the stator disc by the stator coil, when it is in contact with the rotor disc must be greater than the force exerted by the compression spring; furthermore the force is required when the stator disc is in contact with the rotor disc and therefore furthest from the stator coil. This limits the amount of force that the compression spring can be allowed to exert and therefore the amount of braking force that can be applied.

A further problem arises if the brake is subject to vibration; in that case the rotor disc may start to move in small increments relative to the stator disc even while the discs remain in contact, because the vibration may generate transient forces sufficient to overcome the friction forces.

Similar issues arise if the stator disc, instead of being held against rotation as in the case of a brake, is allowed to be drivingly rotated by the rotor disc, with the assembly then acting as a clutch rather than as a brake.

It is an object of the invention to provide an improved electromagnetic brake or clutch and an improved method of operating an electromagnetic brake or clutch.

US 2006/0278491 discloses the features of the pre-characterising portion of claim 1.

### Summary of the Invention

According to the invention there is provided an electromagnetic brake or clutch comprising:
a rotatably mounted shaft;
a motor for rotating the shaft;
a rotor disc mounted on the shaft for rotation therewith;
a brake or clutch disc disposed around the shaft, a first face of the brake or clutch disc confronting a first face of the rotor disc and one of the discs being mounted for movement towards and away from the other disc;
a stator coil which when energised urges the first face of the brake or clutch disc away from the first face of the rotor disc;
the confronting first faces of the discs being provided with circumferentially spaced magnetic regions of alternating polarity, disposed such that, in a first set of rotational positions of the shaft, magnetic regions of one polarity on the first face of the brake or clutch disc confront magnetic regions of the opposite polarity on the first face of the rotor disc, and, in a second set of rotational positions of the shaft interposed between respective ones of the first set of rotational positions, magnetic regions of one polarity on the first face of the brake or clutch disc confront magnetic regions of the same polarity on the first face of the rotor disc.

By using magnetic forces to attract the discs together, the force of attraction can readily be made to increase as the discs get closer together and reduce as they move further apart. Also, the resistance to relative rotation of the discs can readily be arranged to reduce as soon as any significant rotation away from a static fully engaged position occurs. Thus, after just a small amount of rotation the friction force can be eliminated entirely; similarly when returning to a fully engaged position friction force may be applied only close to the very end of the relative movement of the discs. Furthermore, the brake may be more able to maintain the discs in their braked positions even if they are subjected to vibration.

Whilst reference is made to a rotor "disc" and to a brake or clutch "disc", it should be understood that the "disc" need not be of circular shape; whilst the preferred shape of disc is a ring shape, it is within the scope of the invention for a "disc" to comprise only a sector of such a ring and/or to be of non-circular shape. Also, the "disc" may be of conical or frusto-conical shape. The face of the disc that makes frictional contact in operation may be grooved or otherwise shaped to increase the frictional contact area and/or improve the frictional contact in other respects.

Preferably the first set of rotational positions are equiangularly spaced around the axis of rotation of the shaft. The second set of rotational positions are preferably equiangularly spaced midway between respective ones of the first set of rotational positions. The magnetic regions are preferably all disposed at approximately the same radial distance from the axis of rotation of the shaft. Further magnetic regions may be provided on the discs at smaller or greater radial distances from the axis of rotation of the shaft, if desired, to increase the force of attraction between the discs.

The first face of the rotor disc is preferably provided with a high friction surface. Similarly, the first face of the brake or clutch disc is preferably provided with a high friction surface.

The brake or clutch preferably further includes a housing in which the shaft, the motor, the stator and the rotor and brake and clutch discs are at least partly disposed. In an embodiment of the invention described below, the shaft projects outwardly from the housing through an opening and the other parts are disposed within the housing.

In the case where the brake or clutch is a brake, the brake disc is preferably non-rotatably mounted. Preferably a peripheral portion of the brake disc non-rotatably engages an interior wall of the housing. In the case where the brake or clutch is a clutch, the clutch disc is preferably rotatably mounted. Preferably a peripheral portion of the clutch disc non-rotatably engages a member mounted for rotation within the housing on an output drive shaft of the clutch.

Whilst it is within the scope of the invention for the rotor disc to be mounted for axial movement towards and away from the brake or clutch disc which may then be axially fixed and, in the case of a brake, entirely fixed, it is preferred that the brake or clutch disc is mounted for movement towards and away from the rotor disc. This enables a simpler construction to be achieved.

The motor and the stator coil are each preferably disposed around the shaft and are axially spaced from one another with the brake or clutch disc and the rotor disc disposed between them. The brake or clutch disc is preferably disposed adjacent to the stator coil and between the rotor disc and the stator coil. Thus the brake or clutch disc is preferably disposed adjacent to the stator coil and the rotor disc is preferably disposed adjacent to the motor. The stator coil is preferably held in a fixed position relative to the brake or clutch disc. In an embodiment of a brake described below, the stator coil and the brake disc are fixed parts of the brake and in an embodiment of a clutch described below, the stator coil and the clutch disc are mounted for rotation together.

The motor may be of any kind but usually is preferably an electric motor including a rotor fixed to the shaft and a stator surrounding the rotor.

The magnetic regions in the rotor disc and the brake or clutch disc may be provided by discrete magnets in the disc. Each magnet is preferably a rare earth magnet, for example a neodymium magnet. Such a magnet may be made from an alloy comprising mainly, by weight, an alloy of neodymium, iron and boron. In that way an especially strong and lightweight magnet may be provided. The magnets may themselves be disc-shaped with opposite poles on opposite faces of the magnets. Instead of there being discrete magnets, the magnetic regions may be provided by integral magnetic regions of the discs.

The present invention further provides a method of operating an electromagnetic brake or clutch acting on a rotatably mounted shaft, the method comprising:
providing a rotor disc mounted on the shaft for rotation therewith, a brake or clutch disc disposed around the shaft, a first face of the brake or clutch disc confronting a first face of the rotor disc and one of the discs being mounted for movement towards and away from the other disc;
a stator coil which when energised urges the first face of the brake or clutch disc away from the first face of the rotor disc;
the confronting first faces of the rotor and stator discs being provided with circumferentially spaced magnetic regions of alternating polarity, disposed such that magnetic regions of one polarity on the first face of the brake or clutch disc confront magnetic regions of the opposite polarity on the first face of the rotor disc to hold the rotor disc against rotation relative to the brake or clutch disc and urge the rotor disc and brake or clutch disc together in frictional engagement with one another, the stator coil being deenergised;
energising the stator coil to urge the brake or clutch disc away from the rotor disc and energising a motor to rotate the rotor disc to move said magnetic regions of the opposite polarity on the first face of the rotor disc away from said magnetic regions of one polarity on the first face of the brake or clutch disc and to bring magnetic regions of said one polarity on the first face of the rotor disc to positions confronting said magnetic regions of said one polarity on the first face of the brake or clutch disc, whereupon the rotor disc is urged axially away from the brake or clutch disc and is free to rotate relative to the brake or clutch disc. The steps of energising the stator coil and of energising a motor may or may not be carried out simultaneously or in the order in which they are recited above. In the case of a clutch, it is as likely that the step of energising the stator coil will be carried out after the step of energising the motor.

The method may include the step of further rotating the shaft with the stator coil energised and magnetic regions of the rotor disc travelling past magnetic regions on the brake or clutch disc.

The method may include the subsequent steps of deenergising the stator coil and ceasing to drivingly rotate the shaft with the motor, whereupon the rotor disc and the brake or clutch disc move back into a position in which they are urged together in frictional engagement with one another, with magnetic regions of one polarity on the first face of the brake or clutch disc confronting magnetic regions of the opposite polarity on the first face of the rotor disc. The steps of deenergising the stator coil and of ceasing to drivingly rotate the shaft with the motor may or may not be carried out simultaneously or in the order in which they are recited above. In the case of a clutch, the step of deenergising the stator coil is likely to be carried out while the motor is still energised and drivingly rotating the motor shaft.

The method of the invention may be carried out using an electromagnetic brake or clutch of any of the kinds described above.

It will be appreciated that the brake or clutch of the invention and the method of the invention as described herein are closely related and that therefore essential or preferred features of one may, unless indicated otherwise or clearly inappropriate, be incorporated into the other. Thus, features described above in respect of the brake or clutch of the invention may be incorporated into the method of the invention and *vice versa.*

### Brief Description of the Drawings

By way of example embodiments of the invention will now be described with reference to the accompanying schematic drawings, of which:
- Fig. 1: is a sectional side view of an electromagnetic brake assembly with the brake applied;
- Fig. 2: is a sectional side view of the assembly of Fig. 1 with the brake released;
- Fig. 3: is a sectional side view of an electromagnetic clutch assembly with the clutch engaged; and
- Fig. 4: is a sectional side view of an electromagnetic clutch assembly with the clutch disengaged.

### Detailed Description of Embodiments

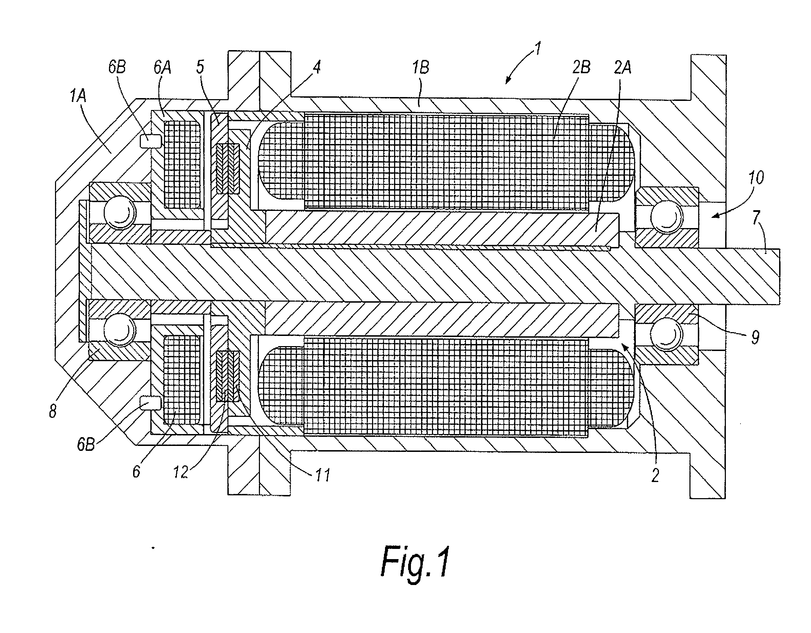

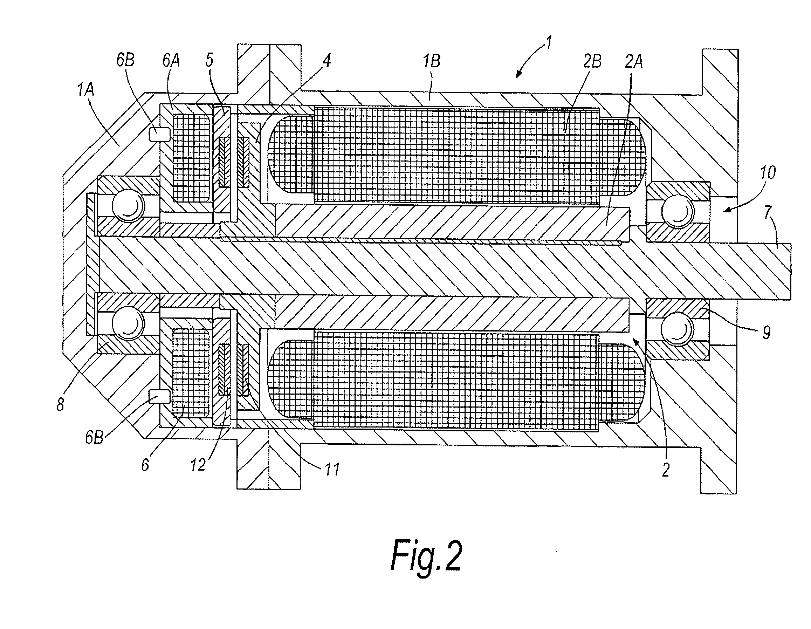

Figs. 1 and 2 show an electromagnetic brake assembly generally comprising a housing 1 in which there is an electric motor 2 having a rotor 2A and a stator 2B and a brake assembly including a rotor disc 4, a stator disc 5 and a brake stator coil 6. The rotor 2A is fixed to a shaft 7.

The housing 1 is in two parts having an end cap 1A closing off one end of the housing 1 and mounting a bearing 8 for one end of the shaft 7 and a main housing 1B in which the motor 2 is received and which mounts a bearing 9 through which the shaft 7 passes, providing the output drive shaft of the assembly, the output drive shaft passing through an opening 10 in the end of the main housing 1B.

The rotor disc 4 is fixed to the shaft 7 and therefore rotates with the shaft 7.

The brake stator coil 6 is mounted in a housing 6A that is fixed to the end cap 1A and in particular non-rotatably fixed to the end cap 1A, by keys 6B. The peripheral edge of the stator disc 5 is mounted in splined engagement with a peripheral edge of the stator coil housing 6A. The disc 5 is held against rotation by virtue of its splined engagement with the housing 6A but is free to slide axially relative to the housing 6A between a position shown in Fig. 1 where the stator disc 5 is in contact with the rotor disc 4 and a position shown in Fig. 2 where the stator disc 5 is spaced from the rotor disc 4 and adjacent to the brake stator coil 6.

The rotor disc 4 has a first, high friction, face confronting the stator disc 5 and carries a ring of permanent magnets 11 equiangularly spaced around the axis of rotation of the shaft 7. The stator disc 5 similarly has a first, high friction, face confronting the rotor disc 4 and carrying a ring of permanent magnets 12 equiangularly spaced around the axis of rotation of the shaft 7. Each ring of magnets 11, 12 consist of magnets whose first faces are of alternating polarity around the ring. The locations of the magnets 11 on the rotor disc 4 match the locations of the magnets 12 on the stator disc 5 so that in one position of the discs, shown in Fig. 1, magnets 11, 12 confront one another with opposite poles of the magnets adjacent so that they attract one another, and in another position of the discs, shown in Fig. 2, the magnets 11, 12 confront one another with the same poles of the magnets adjacent so that they repel one another. Each of the magnets 11, 12 is of circular disc-shape with opposite faces of each magnet of opposite polarity. The confronting faces of the magnets 11, 12 are very slightly recessed from their respective high friction faces so that they do not themselves make frictional contact with one another. In this particular example, each of the magnets is a neodymium magnet and there are twelve magnets in each ring.

The operation of the brake assembly will now be described referring first to Fig. 1 which shows the assembly with the brake applied. In this state, the motor 2 is not actuated and the stator disc 5 is urged into engagement with the rotor disc 4 by the magnetic attraction of the confronting opposite poles of the magnets 11, 12. That results in two types of braking force being applied to the rotor disc 4 and therefore to the output drive shaft 7: a first braking force is provided by the friction between the confronting faces of the discs 4 and 5 which are urged against one another by the magnetic attraction; a second braking force is provided by the magnetic attraction of the opposite poles of the magnets 11, 12. The second braking force not only adds to the overall braking effect but also provides a braking action that is effective against forces generated by vibration: in the event of such vibration the magnetic braking force is effective to inhibit the drive shaft 7 from rotating in small increments because it will seek to bring the opposite poles of the magnets 11, 12 into alignment.

When it is desired to rotate the shaft, the motor 2 is actuated and the stator coil 6 is also energised. Energising the stator coil 6 is arranged to attract the stator disc 5 towards the coil. In a typical application the driving force of the rotor will be comparable to the braking force applied in the braking condition shown in Fig. 1 and with the stator coil 6 de-energised, but it should be understood that it is not essential for the driving force to be greater than the braking force: the consequence of energising the stator coil 6 is to reduce the force with which the discs 4 and 5 are pressed together and therefore to reduce the friction braking force. Provided the rotor driving force is greater than the combination of this reduced friction braking force and the force of magnetic attraction of the opposite poles of the magnets 11, 12, the drive shaft 7 will be rotated.

As the drive shaft 7 begins to rotate, the force of magnetic attraction between the magnets 11, 12 reduces because their poles move further apart; also the force with which the discs 4 and 5 are pressed together further reduces because the magnetic force pushing them together reduces, again because the poles of the magnets 11, 12 move further apart. After a rotation of the rotor drive by a distance of half the spacing of the magnets 11, 12 the poles of the magnets 11 are equispaced from the same poles and the opposite poles of the magnets 12 and at that stage there is no force pressing the discs 4 and 5 together and no friction or magnetic braking force; thus, before that position is reached the stator disc 5 is attracted by the stator coil 6 to move axially towards it (to the left as seen in Figs. 1 and 2) and arrives at the position shown in Fig. 2 where it is spaced from the rotor drive 4.

As the motor continues to operate, the drive shaft 7 continues to rotate and the magnets 11, 12 arrive at a position where the same poles of the magnets confront one another providing a further magnetic force to urge the stator disc 5 away from the rotor disc 4 and therefore towards the stator coil 6. In that position of the stator disc 5, shown in Fig. 2, the magnetic forces between the magnets 11, 12 are reduced because of their axial spacing. With continued rotation of the drive shaft 7, the reduced magnetic forces alternate between ones that attract the discs together and urge them apart but those reduced forces are not sufficient to overcome the force of the stator coil 6 attracting the disc 5 away from the disc 4. Thus the drive shaft 7 and the disc 4 continue to rotate with weak magnetic forces between the magnets 11 and 12 at times promoting that rotation and at times opposing it but generally having little effect.

When it is desired to brake the motor, the stator coil 6 and the motor 2 are de-energised. The disc 5 is then attracted towards the disc 4 and the disc 4 driven by magnetic forces into a rotational position in which poles of the magnets 11 confront opposite poles of the magnets 12, namely a position of the kind shown in Fig. 1. Once the parts reach that position, the output drive shaft 7 is fully braked again.

It may be noted that when the output drive shaft 7 is being drivingly rotated by the motor, the stator coil 6 is energised and the parts are in the position shown in Fig. 2, it is possible, if desired, to de-energise the motor 2, but not the stator coil 6; in that case the output drive shaft 7 is no longer driven but there is very little opposition to its rotation. The motor can then be actuated again, if desired, to rotate the drive shaft 7, or the stator coil 6 can be de-energised to cause the disc 5 to move into contact with the disc 4 and apply the brake.

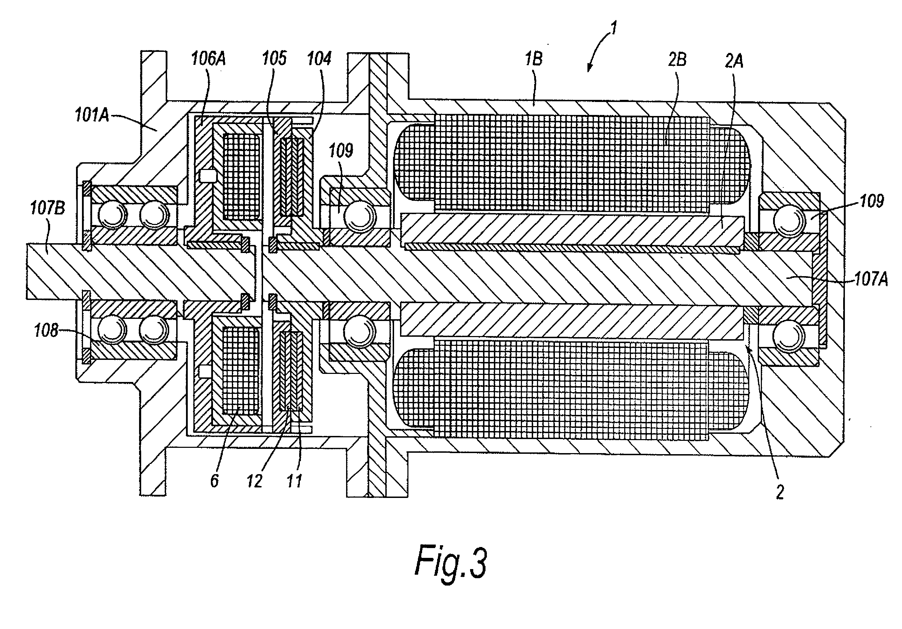

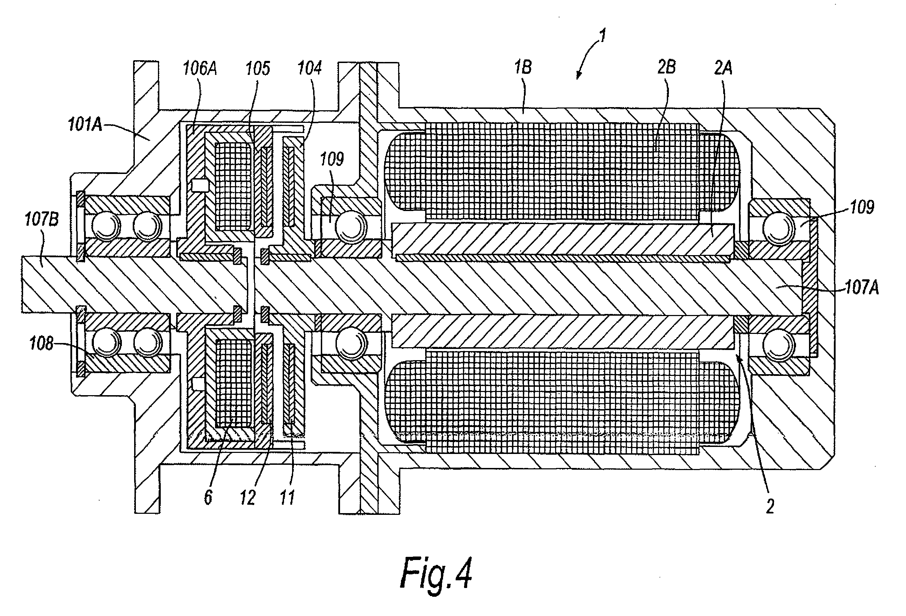

In the example of the invention described above, the assembly is a brake assembly but it should also be understood that a very similar device may be provided as a clutch assembly, as will now be described with reference to Figs. 3 and 4 in which parts corresponding very closely to those shown in Figs. 1 and 2 are referenced by the same reference numerals as those used in Figs. 1 and 2 and other parts with some degree of correspondence are referenced by the numeral used in Figs. 1 and 2 with 100 added to it.

Figs. 3 and 4 show an electromagnetic clutch assembly comprising a housing 1, an electric motor 2 having a rotor 2A and a stator 2B and a clutch assembly including a drive disc 104, a clutch disc 105 and a clutch coil 6. The rotor 2A is fixed to a shaft 107A.

The housing 1 is in two parts having an end cap 101A closing off one end of the housing 1 and mounting a bearing 108 for an output drive shaft 107B and a main housing 1B in which the motor 2 is received and which mounts a pair of bearings 109 in which the shaft 107A is journalled. The output drive shaft 107B passes through an open end of the end cap 101A.

The drive disc 104 is fixed to the shaft 107A and therefore rotates with the shaft 107A.

The clutch coil 6 is mounted in a housing 106A that is fixed to the output drive shaft 107B. The peripheral edge of the clutch disc 105 is mounted in splined engagement with a peripheral edge of the housing 106A. The clutch disc 105 is held against rotation relative to the housing 106A by virtue of its splined engagement with the housing 106A but is free to slide axially relative to the housing 106A between a position shown in Fig. 3 where the clutch disc 105 is in contact with the drive disc 104 and a position shown in Fig. 4 where the clutch disc 105 is spaced from the drive disc 104 and adjacent to the clutch coil 106.

The drive disc 104 and the clutch disc 105 have confronting faces that are the same as described above for the discs 4 and 5 in Figs. 1 and 2 and include permanent magnets 11 and 12.

As will now be understood, the assembly of Figs. 3 and 4 is very similar to that of the brake assembly of Figs. 1 and 2. In Fig. 4 the assembly is shown with the clutch disengaged because the clutch coil 6 is energised. In this state, if the motor 2 is actuated, it will rotate the shaft 107A but, the shaft 107B will not be driven. If then the clutch coil 6 is de-energised, the clutch drive 105 will be driven by magnetic forces into the position shown in Fig. 3, the clutch becomes engaged and the shaft 107B will be drivingly rotated by the shaft 107A via the interengaging clutch faces and the housing 106A. As will be understood, the interengaging clutch faces transfer drive torque and engage and disengage in the same manner as braking torque is transferred in the embodiment of Figs. 1 and 2. When it is desired to stop driving the shaft 107B, the clutch coil 6 is energised and the clutch disc 105 drawn back into the position shown in Fig. 4.

In the description above the clutch is engaged and disengaged while the shaft 107A is rotating, but of course it can also be engaged or disengaged when the shaft 107A is stationary.

In the example of the clutch described above, the clutch coil 6 rotates with the clutch housing 106A when the drive shaft 107B rotates, but it remains in fixed relationship to the clutch disc 105 and is therefore referred to herein as both a "clutch coil" and a "stator coil".

An advantage of the brake or clutch described above is that it can operate at a significant relative speed of rotation of the rotor disc 4 relative to the stator disc 5, without damage. This is in contrast, for example, to a dog clutch.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. An electromagnetic brake or clutch comprising:
a rotatably mounted shaft (7,107A);
a motor (2) for rotating the shaft;
a rotor disc (4,104) mounted on the shaft for rotation therewith;
a brake (5) or clutch (105) disc disposed around the shaft, a first face of the brake or clutch disc confronting a first face of the rotor disc and one of the discs being mounted for movement towards and away from the other disc;
a stator coil (6),
**characterised in that**:
the stator coil, when energised, is configured to urge the first face of the brake or clutch disc away from the first face of the rotor disc; and
the confronting first faces of the discs are provided with circumferentially spaced magnetic regions of alternating polarity, disposed such that, in a first set of rotational positions of the shaft, magnetic regions of one polarity on the first face of the brake or clutch disc confront magnetic regions of the opposite polarity on the first face of the rotor disc, and, in a second set of rotational positions of the shaft interposed between respective ones of the first set of rotational positions, magnetic regions of one polarity on the first face of the brake or clutch disc confront magnetic regions of the same polarity on the first face of the rotor disc.

2. An electromagnetic brake or clutch according to claim 1, in which the first set of rotational positions are equiangularly spaced around the axis of rotation of the shaft.

3. An electromagnetic brake or clutch according to claim 2, in which the second set of rotational positions are equiangularly spaced midway between respective ones of the first set of rotational positions.

4. An electromagnetic brake or clutch according to any preceding claim, in which the magnetic regions are all disposed at approximately the same radial distance from the axis of rotation of the shaft.

5. An electromagnetic brake or clutch according to any preceding claim, further including a housing (1) in which the shaft, the motor, the stator and the rotor and brake or clutch discs are at least partly disposed.

6. An electromagnetic brake or clutch according to claim 5, in which the brake or clutch is a brake and a peripheral portion of the brake disc non-rotatably engages an interior wall (6A) of the housing.

7. An electromagnetic brake or clutch according to claim 5, in which the brake or clutch is a clutch and a peripheral portion of the clutch disc non-rotatably engages a member (106A) mounted for rotation within the housing on an output drive shaft (107B) of the clutch.

8. An electromagnetic brake or clutch according to any preceding claim, in which the brake or clutch disc is mounted for movement towards and away from the rotor disc.

9. An electromagnetic brake or clutch according to any preceding claim, in which the motor and the stator coil are each disposed around the shaft and are axially spaced from one another with the brake or clutch disc and the rotor disc disposed between them, the brake or clutch disc being disposed adjacent to the stator coil and the rotor disc being disposed adjacent to the motor.

10. An electromagnetic brake or clutch according to claim 9, in which the motor is an electric motor including a rotor (2A) fixed to the shaft and a stator (2B) surrounding the rotor.

11. An electromagnetic brake or clutch according to any preceding claim, in which the magnetic regions on the rotor disc and the brake or clutch disc are provided by discrete magnets (11,12) in the discs.

12. An electromagnetic brake or clutch according to any of claims 1 to 10, in which the magnetic regions on the rotor disc and brake or clutch discs are provided by integral magnetised regions of the discs.

13. A method of operating an electromagnetic brake or clutch acting on a rotatably mounted shaft (7,107A), the method comprising:
providing a rotor disc (4,104) mounted on the shaft for rotation therewith, a brake (5) or clutch (105) disc disposed around the shaft, a first face of the brake or clutch disc confronting a first face of the rotor disc and one of the discs being mounted for movement towards and away from the other disc;
providing a stator coil (6),
**characterised by**:
the stator coil, when energised, urging the first face of the brake or clutch disc away from the first face of the rotor disc;
the confronting first faces of the rotor and stator discs being provided with circumferentially spaced magnetic regions of alternating polarity, disposed such that magnetic regions of one polarity on the first face of the brake or clutch disc confront magnetic regions of the opposite polarity on the first face of the rotor disc to hold the rotor disc against rotation relative to the brake or clutch disc and urge the rotor disc and brake or clutch disc together in frictional engagement with one another, the stator coil being deenergised;
energising the stator coil to urge the brake or clutch disc away from the rotor disc and energising a motor to rotate the rotor disc to move said magnetic regions of the opposite polarity on the first face of the rotor disc away from said magnetic regions of one polarity on the first face of the brake or clutch disc and to bring magnetic regions of said one polarity on the first face of the rotor disc to positions confronting said magnetic regions of said one polarity on the first face of the brake or clutch disc, whereupon the rotor disc is urged axially away from the brake or clutch disc and is free to rotate relative to the brake or clutch disc.

14. A method according to claim 13, including the step of further rotating the shaft with the stator coil energised and magnetic regions of the rotor disc travelling past magnetic regions of alternating polarity on the stator disc,
and preferably including the subsequent steps of deenergising the stator coil and ceasing to drivingly rotate the shaft with the motor, whereupon the rotor disc and the brake or clutch disc move back into a position in which they are urged together in frictional engagement with one another, with magnetic regions of one polarity on the first face of the brake or clutch disc confronting magnetic regions of the opposite polarity on the first face of the rotor disc.

15. A method according to claim 13 to 14, in which the method is carried out using an electromagnetic brake or clutch according to any of claims 1 to 12.

## Patentansprüche

1. Elektromagnetische Bremse oder Kupplung, umfassend:
eine drehbar angebrachte Welle (7, 107A);
einen Motor (2) zum Drehen der Welle;
eine Läuferscheibe (4, 104), die an der Welle angebracht ist, um sich mit dieser zu drehen;
eine Scheibe einer Bremse (5) oder Kupplung (105), die um die Welle herum angeordnet ist, wobei eine erste Fläche der Brems- oder Kupplungsscheibe einer ersten Fläche der Läuferscheibe zugewandt ist und eine der Scheiben derart angebracht ist, dass sie sich zu der anderen Scheibe hin und von dieser fort bewegt;
eine Ständerspule (6),
**dadurch gekennzeichnet, dass**:
die Ständerspule bei Versorgung mit Strom dazu konfiguriert ist, die erste Fläche der Brems- oder Kupplungsscheibe von der ersten Fläche der Läuferscheibe fort zu bewegen; und
die einander zugewandten ersten Flächen der Scheiben mit am Umfang beabstandeten magnetischen Regionen von alternierender Polarität versehen sind, die derart angeordnet sind, dass in einer ersten Gruppe von Drehpositionen der Welle magnetische Regionen von einer Polarität an der ersten Fläche der Brems- oder Kupplungsscheibe magnetischen Regionen der entgegengesetzten Polarität an der ersten Fläche der Läuferscheibe zugewandt sind, und in einer zweiten Gruppe von Drehpositionen der Welle, die zwischen den jeweiligen der ersten Gruppe von Drehpositionen liegen, magnetische Regionen einer Polarität an der ersten Fläche der Brems- oder Kupplungsscheibe magnetischen Regionen der gleichen Polarität an der ersten Fläche der Läuferscheibe zugewandt sind.

2. Elektromagnetische Bremse oder Kupplung nach Anspruch 1, wobei die erste Gruppe von Drehpositionen gleichmäßig beabstandet um die Drehachse der Welle angeordnet sind.

3. Elektromagnetische Bremse oder Kupplung nach Anspruch 2, wobei die zweite Gruppe von Drehpositionen gleichmäßig beabstandet in der Mitte zwischen jeweiligen der ersten Gruppe von Drehpositionen angeordnet sind.

4. Elektromagnetische Bremse oder Kupplung nach einem der vorangehenden Ansprüche, wobei die magnetischen Regionen alle in etwa dem gleichen radialen Abstand von der Drehachse der Welle angeordnet sind.

5. Elektromagnetische Bremse oder Kupplung nach einem der vorangehenden Ansprüche, ferner aufweisend ein Gehäuse (1), in dem die Welle, der Motor, der Ständer und der Läufer und die Brems- oder Kupplungsscheiben wenigstens teilweise angeordnet sind.

6. Elektromagnetische Bremse oder Kupplung nach Anspruch 5, wobei die Bremse oder Kupplung eine Bremse ist und ein Umfangsabschnitt der Bremsscheibe nicht-drehend in Eingriff mit einer Innenwand (6A) des Gehäuses steht.

7. Elektromagnetische Bremse oder Kupplung nach Anspruch 5, wobei die Bremse oder Kupplung eine Kupplung ist und ein Umfangsabschnitt der Kupplungsscheibe nicht-drehbar mit einem Element (106A) in Eingriff steht, das zur Drehung an einer Ausgangsantriebswelle (107B) der Kupplung im Gehäuse angebracht ist.

8. Elektromagnetische Bremse oder Kupplung nach einem der vorangehenden Ansprüche, wobei die Brems- oder Kupplungsscheibe zur Bewegung zur Läuferscheibe hin und von dieser fort angebracht ist.

9. Elektromagnetische Bremse oder Kupplung nach einem der vorangehenden Ansprüche, wobei der Motor und die Ständerspule jeweils um die Welle herum angeordnet sind und axial voneinander beabstandet sind, wobei die Brems- oder Kupplungsscheibe und die Läuferscheibe zwischen ihnen angeordnet sind, wobei die Brems- oder Kupplungsscheibe benachbart zur Ständerspule und die Läuferscheibe benachbart zum Motor angeordnet ist.

10. Elektromagnetische Bremse oder Kupplung nach Anspruch 9, wobei der Motor ein Elektromotor mit einem Läufer (2A), der an die Welle befestigt ist, und einem Ständer (2B) ist, der den Läufer umgibt.

11. Elektromagnetische Bremse oder Kupplung nach einem der vorangehenden Ansprüche, wobei die magnetischen Regionen an der Läuferscheibe und der Brems- oder Kupplungsscheibe durch gesonderte Magnete (11, 12) in den Scheiben bereitgestellt sind.

12. Elektromagnetische Bremse oder Kupplung nach einem der Ansprüche 1 bis 10, wobei die magnetischen Regionen an der Läuferscheibe und der Brems- oder Kupplungsscheibe durch einstückige magnetisierte Regionen der Scheiben bereitgestellt sind.

13. Verfahren zum Betreiben einer elektromagnetischen Bremse oder Kupplung, die auf eine drehbar angebrachte Welle (7, 107A) einwirkt, wobei das Verfahren Folgendes umfasst:
Bereitstellen einer Läuferscheibe (4, 104), die an der Welle angebracht ist, um sich mit dieser zu drehen, wobei eine Scheibe einer Bremse (5) oder Kupplung (105) um die Welle herum angeordnet ist, wobei eine erste Fläche der Brems- oder Kupplungsscheibe einer ersten Fläche der Läuferscheibe zugewandt ist und eine der Scheiben derart angebracht ist, dass sie sich zu der anderen Scheibe hin und von dieser fort bewegt;
Bereitstellen einer Ständerspule (6),
**dadurch gekennzeichnet, dass**:
die Ständerspule bei Versorgung mit Strom die erste Fläche der Brems- oder Kupplungsscheibe von der ersten Fläche der Läuferscheibe fort bewegt;
die einander zugewandten ersten Flächen der Läufer- und der Ständerscheibe mit am Umfang beabstandeten magnetischen Regionen von alternierender Polarität versehen sind, die derart angeordnet sind, dass magnetische Regionen von einer Polarität an der ersten Fläche der Brems- oder Kupplungsscheibe magnetischen Regionen der entgegengesetzten Polarität an der ersten Fläche der Läuferscheibe zugewandt werden, um die Läuferscheibe gegen Drehung relativ zur Brems- oder Kupplungsscheibe zu halten und die Läuferscheibe und die Brems- oder Kupplungsscheibe in Reibungseingriff miteinander zueinander hin zu bewegen, wobei die Ständerspule nicht mit Strom versorgt wird;
die Ständerspule mit Strom versorgt wird, um die Brems- oder Kupplungsscheibe von der Läuferscheibe fort zu bewegen, und der Motor mit Strom versorgt wird, um die Läuferscheibe zu drehen, um die magnetische Regionen der entgegengesetzten Polarität an der ersten Fläche der Läuferscheibe von den magnetischen Regionen einer Polarität an der ersten Fläche der Brems- oder Kupplungsscheibe fort zu bewegen und magnetische Regionen der einen Polarität an der ersten Fläche der Läuferscheibe in Positionen zu bringen, in denen sie den magnetischen Regionen der einen Polarität an der ersten Fläche der Brems- oder Kupplungsscheibe zugewandt sind, woraufhin die Läuferscheibe axial von der Brems- oder Kupplungsscheibe fort bewegt wird und sich relativ zur Brems- oder Kupplungsscheibe frei drehen kann.

14. Verfahren nach Anspruch 13, einschließend den Schritt, die Welle bei Versorgung der Ständerspule mit Strom weiter zu drehen, wobei magnetische Regionen der Läuferscheibe sich an magnetischen Regionen alternierender Polarität an der Ständerscheibe vorbei bewegen,
und vorzugsweise einschließend die nachfolgenden Schritte, die Ständerspule nicht mehr mit Strom zu versorgen und die Welle nicht mehr antreibend mit dem Motor zu drehen, woraufhin die Läuferscheibe und die Brems- oder Kupplungsscheibe sich zurück in eine Position bewegen, in der sie in Reibungseingriff miteinander zueinander hin bewegt werden, wobei magnetische Regionen einer Polarität an der ersten Fläche der Brems- oder Kupplungsscheibe magnetischen Regionen der entgegengesetzten Polarität an der ersten Fläche der Läuferscheibe zugewandt werden.

15. Verfahren nach Anspruch 13 bis 14, wobei das Verfahren unter Verwendung einer elektromagnetischen Bremse oder Kupplung nach einem der Ansprüche 1 bis 12 ausgeführt wird.

## Revendications

1. Frein ou embrayage électromagnétique comprenant :
un arbre monté à rotation (7, 107A) ;
un moteur (2) permettant de faire tourner l'arbre ;
un disque à rotor (4, 104) monté sur l'arbre pour rotation avec celui-ci ;
un disque de frein (5) ou d'embrayage (105) disposé autour de l'arbre, une première face du disque de frein ou d'embrayage faisant face à une première face du disque de rotor et un des disques étant monté pour un mouvement vers l'autre disque et d'écartement de celui-ci ;
une bobine de stator (6),
**caractérisé en ce que** :
la bobine de stator, lorsqu'elle est mise sous tension, est configurée pour pousser la première face du disque de frein ou d'embrayage à l'écart de la première face du disque du rotor ; et
les premières faces des disques qui se font face sont dotées de régions magnétiques espacées circonférentiellement de polarité alternative, disposées de sorte que lors d'un premier ensemble de positions de rotations de l'arbre, des régions magnétiques d'une polarité sur la première face du disque de frein ou d'embrayage font face à des régions magnétiques de la polarité opposée sur la première face du disque de rotor et lors d'un deuxième ensemble de positions en rotation de l'arbre interposées entre des positions respectives du premier ensemble de positions de rotation, des régions magnétiques d'une polarité situées sur la première face du disque de frein ou d'embrayage font face à des régions magnétiques de la même polarité sur la première face du disque de rotor.

2. Frein ou embrayage électromagnétique selon la revendication 1, dans lequel le premier ensemble de positions de rotation est espacé de manière équi-angulaire autour de l'axe de rotation de l'arbre.

3. Frein ou embrayage électromagnétique selon la revendication 2, dans lequel le deuxième ensemble de positions de rotation est espacé de manière équi-angulaire à mi-chemin entre des positions respectives du premier ensemble de positions de rotation.

4. Frein ou embrayage électromagnétique selon l'une quelconque des revendications précédentes, dans lequel les régions magnétiques sont toutes disposées à peu près à la même distance radiale de l'axe de rotation de l'arbre.

5. Frein ou embrayage électromagnétique selon l'une quelconque des revendications précédentes, comprenant en outre un carter (1) dans lequel l'arbre, le moteur, le stator et le rotor et les disques de frein ou d'embrayage sont disposés au moins en partie.

6. Frein ou embrayage électromagnétique selon la revendication 5, dans lequel le frein ou l'embrayage est un frein et où une partie périphérique du disque de frein s'engage sans liberté de rotation dans une paroi intérieure (6A) du carter.

7. Frein ou embrayage électromagnétique selon la revendication 5, dans lequel le frein ou l'embrayage est un embrayage et où une partie périphérique du disque d'embrayage s'engage sans liberté de rotation dans un élément (106A) monté pour tourner au sein du carter sur un arbre d'entraînement de sortie (107B) de l'embrayage.

8. Frein ou embrayage électromagnétique selon l'une quelconque des revendications précédentes, dans lequel le disque de frein ou d'embrayage est monté pour un mouvement vers le disque de rotor et d'écartement de celui-ci.

9. Frein ou embrayage électromagnétique selon l'une quelconque des revendications précédentes, dans lequel le moteur et la bobine de stator sont chacun disposés autour de l'arbre et sont espacés axialement l'un de l'autre alors que le disque de frein ou d'embrayage et le disque de rotor sont disposés entre eux, le disque de frein ou d'embrayage étant disposé de manière adjacente vis-à-vis de la bobine de stator et le disque de rotor étant disposé de manière adjacente vis-à-vis du moteur.

10. Frein ou embrayage électromagnétique selon la revendication 9, dans lequel le moteur est un moteur électrique comprenant un rotor (2A) fixé à l'arbre et un stator (2B) entourant le rotor.

11. Frein ou embrayage électromagnétique selon l'une quelconque des revendications précédentes, dans lequel les régions magnétiques présentes sur le disque de rotor et sur le disque de frein ou d'embrayage sont dotées d'aimants discrets (11, 12) dans les disques.

12. Frein ou embrayage électromagnétique selon l'une quelconque des revendications 1 à 10, dans lequel les régions magnétiques présentes sur le disque de rotor et de frein ou sur les disques d'embrayage sont dotées de régions magnétisées intégrées des disques.

13. Procédé d'actionnement d'un frein ou d'un embrayage électromagnétique agissant sur un arbre monté à rotation (7, 107A), ce procédé comprenant :
le fait de prendre un disque de rotor (4, 104) monté sur l'arbre pour une rotation avec celui-ci, un frein (5) ou un embrayage (105) disposé autour de l'arbre, une première face du disque de frein ou d'embrayage faisant face à une première face du disque de rotor et un des disques étant monté pour un mouvement vers l'autre disque et d'écartement de celui-ci ;
le fait de prendre une bobine (6) de stator,
**caractérisé par** :
la bobine du stator, lorsqu'elle est sous tension, pousse la première face du disque de frein ou d'embrayage à l'écart de la première face du disque de rotor ;
les premières faces qui se font face des disques du rotor et du stator étant dotées de régions magnétiques espacées circonférentiellement de polarité alternée, disposées de sorte que des régions magnétiques d'une polarité de la première face du disque de frein ou d'embrayage soient face à des régions magnétiques de la polarité opposée sur la première face du disque de rotor, afin de maintenir le disque de rotor contre la rotation par rapport au disque de frein ou d'embrayage et de pousser le disque de rotor et le disque de frein ou d'embrayage conjointement en engagement de friction l'un avec l'autre, la bobine de stator étant désactivée ;
la mise sous tension de la bobine de stator pour pousser le disque de frein ou d'embrayage à l'écart du disque de rotor et la mise sous tension d'un moteur pour qu'il fasse tourner le disque de rotor, afin de déplacer lesdites régions magnétiques de la polarité opposée sur la première face du disque de rotor à l'écart desdites régions magnétiques d'une polarité sur la première face du disque de frein ou d'embrayage, afin de porter les régions magnétiques de ladite une polarité sur la première face du disque de rotor jusqu'à des positions faisant face aux dites régions magnétiques de ladite une polarité sur la première face du disque de frein ou d'embrayage, moyennant quoi le disque de rotor est poussé axialement à l'écart du disque de frein ou d'embrayage et est libre de tourner par rapport au disque de frein ou d'embrayage.

14. Procédé selon la revendication 13, comprenant l'étape consistant à encore faire tourner l'arbre alors que la bobine de stator est mise sous tension et que les régions magnétiques du disque de rotor parcourent des régions magnétiques de polarité alternative sur le disque de stator,
et comprenant de préférence les étapes ultérieures de désactivation de la bobine de stator et la cessation de l'entraînement en rotation de l'arbre avec le moteur, moyennant quoi le disque de rotor et le disque de frein ou d'embrayage reculent dans une position dans laquelle ils sont poussés ensemble en engagement de friction l'un par rapport à l'autre, alors que les régions magnétiques d'une polarité sur la première face du disque de frein ou d'embrayage font face aux régions magnétiques de la polarité opposée sur la première face du disque du rotor.

15. Procédé selon la revendication 13 à 14, dans lequel le procédé a lieu à l'aide d'un frein ou d'un embrayage électromagnétique conforme à l'une quelconque des revendications 1 à 12.
